# EUROPÄISCHE PATENTSCHRIFT

(11) **EP 1 757 419 B1**
(45) Veröffentlichungstag und Bekanntmachung des Hinweises auf die Patenterteilung: **17.10.2012**
(21) Anmeldenummer: 06016365.6
(22) Anmeldetag: 04.08.2006
(51) Int. Cl.: B28D 5/04, B28D 5/00

(54) **Verfahren, Vorrichtung und Slurry zum Drahtsägen**
Method, apparatus and slurry for wire sawing
Procédé, dispositif et boue pour le sciage à fil

(30) Priorität: 25.08.2005 DE 102005040343; 22.09.2005 US 719185 P
(43) Veröffentlichungstag der Anmeldung: 28.02.2007
(60) Teilanmeldung: 10186202.7
(73) Patentinhaber: Freiberger Compound Materials GmbH, 09599 Freiberg (DE)
(72) Erfinder: Hammer, Ralf, Dr., 09599 Freiberg (DE); Kleinwechter, André, Dr., 09599 Freiberg (DE); Müller, Sylvia, 09599 Freiberg (DE); Gruszynsky, Ralf, 09618 Brand-Erbisdorf (DE)
(74) Vertreter: Hofer, Dorothea

(56) Entgegenhaltungen:
- WO-A-2005/039824
- US-A1- 2004 055 993
- US-B1- 6 422 067

## Beschreibung

Die Erfindung bezieht sich auf eine Drahtsäge gemäß dem Oberbegriff des Anspruchs 1, ein Verfahren gemäß dem Oberbegriff des Anspruchs 7, eine Slurry gemäß dem Oberbegriff des Anspruchs 14 sowie ein Verfahren gemäß dem Oberbegriff des Anspruchs 17. Eine Drahtsäge gemäß dem Oberbegriff des Anspruchs 1 und ein Verfahren gemäß dem Oberbegriff des Anspruchs 7 sind dem Dokument WO 2005/039 824 A1 zu entnehmen.

Ein Slurry gemäß dem Oberbegriff des Anspruchs 14 und ein Verfahren gemäß dem Oberbegriff des Anspruchs 17 sind dem Dokument US 6 422 067 B1 zu entnehmen.

Aus der EP 0 837 115 B1 ist ein Verfahren zum Abtrennen von Scheiben von einem Kristall aus sprödem und hartem Material mit einer Drahtsäge bekannt, bei dem ein in Suspensionsform vorliegendes Mittel eingesetzt wird. Das Mittel besteht im Wesentlichen aus einer nicht-wässerigen Flüssigkeit, in der abrasiv wirkende Hartstoffteilchen dispergiert sind. Die nicht-wässerige Flüssigkeit ist aus einer Gruppe von Verbindungen ausgewählt, die Polyglykole mit einem Molekulargewicht von 75 bis 150 und beliebige Mischungen dieser Verbindung umfasst und höchstens bis zu 5 Gew.-% Wasser bezogen auf das Gewicht der Suspension enthält. Die Viskosität der Flüssigkeit liegt vorzugsweise bei 50-800 mPas bei 20°C. Das Verfahren hat den Nachteil, dass die eingesetzte Sägesuspension häufiger ausgetauscht werden muss und sich die Eigenschaften der Slurry beim Drahtsägen unkontrolliert ändern können.

Aus der CH 691 039 A5 ist die Verwendung einer Slurry beim Drahtsägen bekannt, die aus einem Gemisch aus Polyolen besteht, von denen mindestens eines ein Polyglykol ist. Das Gemisch aus Polyolen kann dabei so gewählt sein, dass die Viskosität der Slurry einen vorbestimmten Wert hat. Weiter ist beschrieben, dass das Gemisch aus Polyolen Wasser enthalten kann.

Aus der EP 0 686 684 A1 ist die Verwendung einer Sägesuspension bekannt, welche aus einem Abrasivstoff in flüssiger wässriger Phase besteht. Die Sägesuspension enthält einen Verdicker wie z.B. wasserlösliche Polymere. Dabei liegt die Viskosität der Sägesuspension zwischen 10 und 1000 mPas bei einer Schergeschwindigkeit von 10 s⁻¹.

Aus der DE 199 38 339 A1 ist eine Sägesuspension zur Verwendung in einer Drahtsäge bekannt, die mindestens einen Vertreter aus der Gruppe der Mineralöle und Glykole enthält. Weiter wird mindestens ein weiterer Zusatzstoff, der aus der Gruppe der Polysiloxane ausgewählt ist, verwendet.

In der US 6,422,067 B1 wird in Figur 4 eine für das Drahtsägen geeignete Slurry gezeigt, die eine Viskosität von etwa 200 mPas bei einer Schergeschwindigkeit von etwa 2 s⁻¹ und von etwa 80 mPas bei einer Schergeschwindigkeit von etwa 34 s⁻¹ besitzt.

Bei einem der Anmelderin bekannten Verfahren zum Drahtsägen wird eine Slurry auf Glykolbasis verwendet, die eine Trägerflüssigkeit auf Glykolbasis und SiC-Körner (SiC Fujimi GC 1000) als abrasiv wirkenden Hartstoff enthält. Der Wassergehalt der Slurry bleibt beim Drahtsägen konstant.

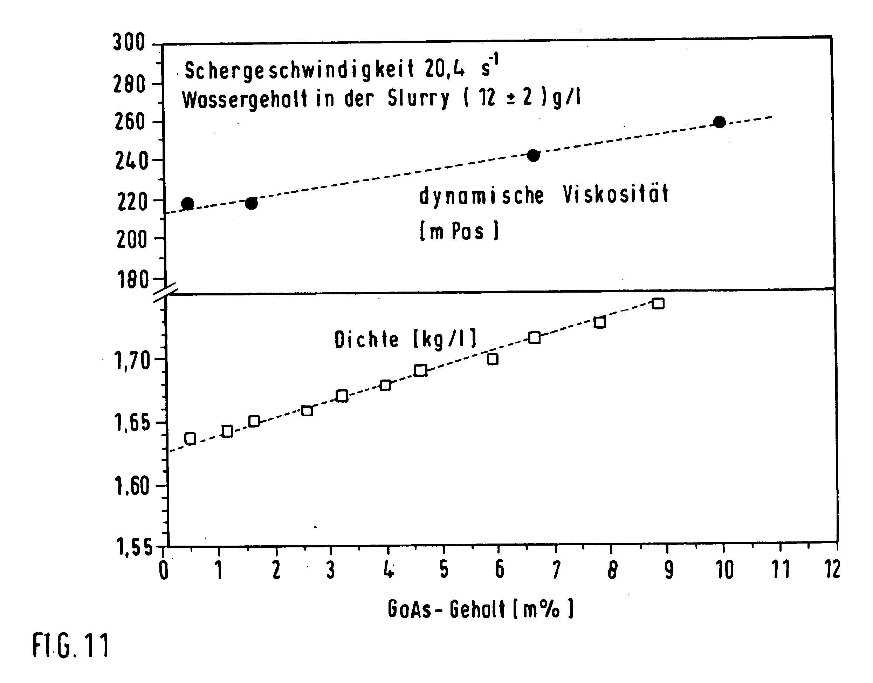

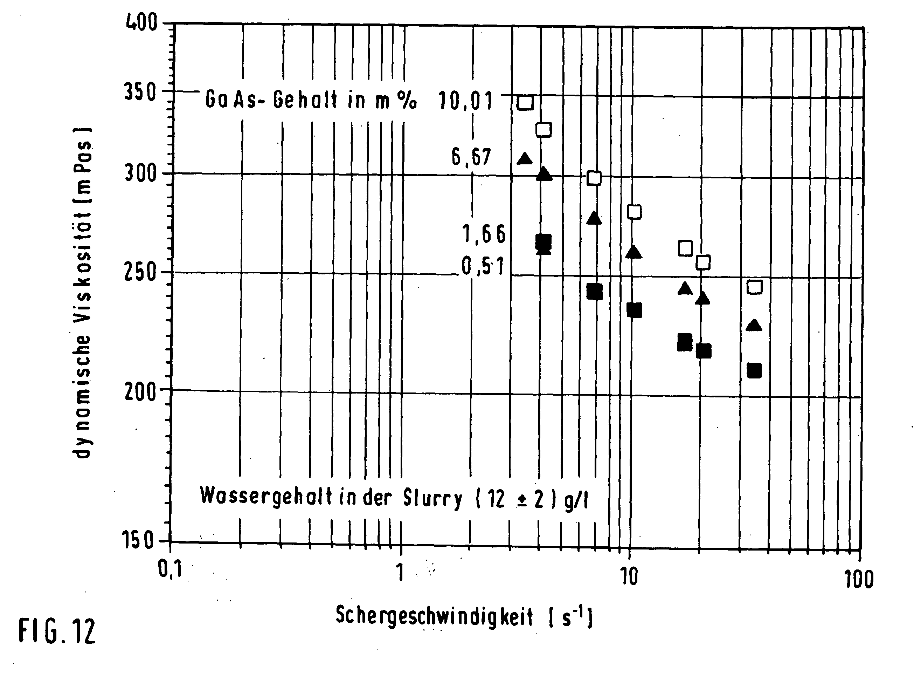

In Figuren 11 und 12 sind die Änderungen einer Slurry auf Glykolbasis mit der Trägersubstanz mit dem Produktnamen Pluriol E 200 mit zunehmender Verwendungsdauer zum Drahtsägen von GaAs-Kristallen dargestellt. Der Wassergehalt der Slurry bleibt hierbei in etwa konstant bei (12 ± 2) g/l. Im oberen Teil von Fig. 11 ist die dynamische Viskosität der Slurry bei einer Schergeschwindigkeit von 20,4 s⁻¹ gegen den GaAs-Gehalt der Slurry aufgetragen. Dabei entspricht ein zunehmender GaAs-Gehalt einer zunehmenden Verwendungsdauer der Slurry zum Drahtsägen von GaAs. Im unteren Teil von Fig. 11 ist die Dichte der Slurry gegen den GaAs-Gehalt aufgetragen. Die dynamische Viskosität und die Dichte der Slurry nehmen in etwa linear mit dem GaAs-Gehalt zu. In Fig. 12 ist die dynamische Viskosität der Slurry für verschiedene GaAs-Gehalte gegen die Schergeschwindigkeit aufgetragen. Die Slurry zeigt dabei für jeden der gezeigten GaAs-Gehalte ein nicht-newtonsches Verhalten.

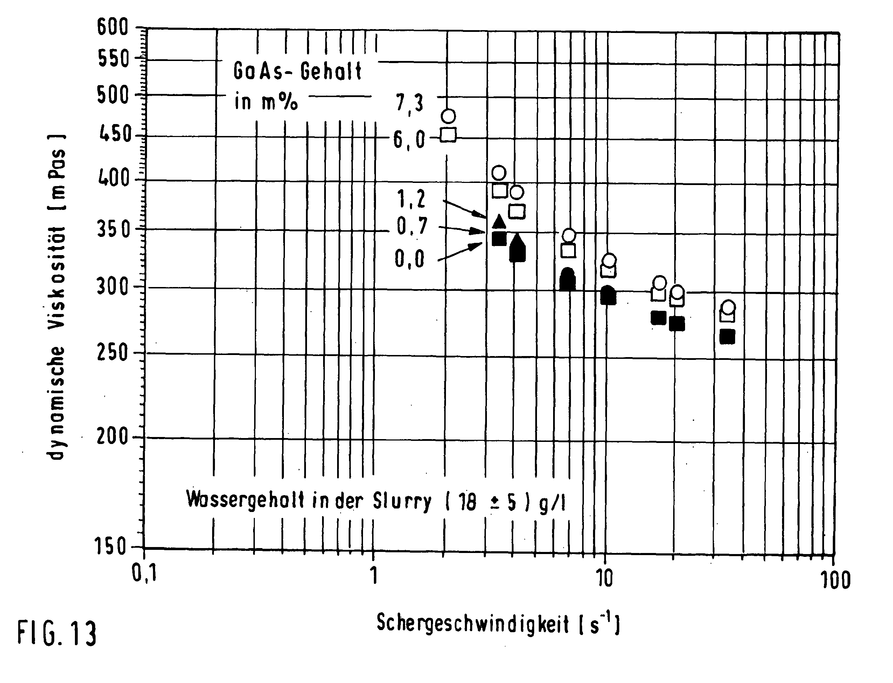

Fig. 13 zeigt das Verhalten einer Slurry, die eine Trägersubstanz auf Glykolbasis mit dem Produktnamen Betronol MF V 1016 enthält und einen in etwa konstanten Wassergehalt von (18 ± 5) g/l aufweist. In der Figur ist die dynamische Viskosität der Slurry für verschiedene Gas-Gehalte gegen die Schergeschwindigkeit aufgetragen. Wie oben nimmt die dynamische Viskosität mit zunehmendem GaAs-Gehalt, d.h. mit zunehmender Verwendungsdauer der Slurry zu. Gleichzeitig zeigt die Slurry für jeden GaAs-Gehalt ein nicht-newtonsches Verhalten.

Das der Anmelderin bekannte Verfahren hat den Nachteil, dass die Änderungen der Eigenschaften der Slurry mit zunehmender Verwendungsdauer gleichzeitig mit einer Verschlechterung der Qualität der so hergestellten GaAs-Scheiben einhergehen. Insbesondere sind auf der Oberfläche der GaAs-Scheiben nach dem Drahtsägen mit bloßem Auge Strukturen sichtbar, die auf die Orientierung des Drahtes relativ zu den GaAs-Scheiben während des Sägens schließen lassen. Aufgrund dieser Strukturen muss auch bei einseitig polierten Wafern vor dem Ausliefern an die Bauelementhersteller bzw. vor dem epitaktischen Herstellen von Bauelementen die Rückseite der Wafer z.B. durch Planläppen nachbearbeitet werden.

Es ist Aufgabe der vorliegenden Erfindung, ein Verfahren, eine Vorrichtung und eine Slurry zum Drahtsägen bereitzustellen, mit dem bzw. der eine verbesserte Qualität der von einem Werkstück abgetrennten Scheiben erzielt werden kann. Weiter ist es Aufgabe der vorliegenden Erfindung, die Verwendungsdauer der Slurry zu erhöhen, ohne dass die längere Verwendungsdauer zu einer Verschlechterung der Eigenschaften der abgetrennten Scheiben führt.

Die Aufgabe der Erfindung wird gelöst durch eine Drahtsäge nach Anspruch 1, ein Verfahren zum Trennen eines Werkstückes mittels Drahtsägen nach Anspruch 7, durch eine Slurry nach Anspruch 4 und ein Verfahren zum Vorkonditionieren einer Slurry nach Anspruch 17.

Vorteilhafte Ausführungsformen der Erfindung sind den abhängigen Ansprüchen zu entnehmen.

Die Verwendung der erfindungsgemäßen Drahtsäge hat den Vorteil, dass durch die Regelung des Wassergehaltes zumindest eines Teiles des die Slurry umgebenden gasförmigen Mediums der Wassergehalt der Slurry und damit die rheologischen Eigenschaften und die Viskosität der Slurry gezielt eingestellt werden können.

In einer bevorzugten Ausführungsform wird der Wassergehalt von dem die Slurry umgebenden gasförmigen Medium auf einen konstanten Wert geregelt, sodass gezielt Wasser in die Slurry aufgenommen wird. Dies hat den Vorteil, dass die Viskosität trotz steigender Dichte der Slurry absinkt und einen stabilen Wert erreicht. Dadurch wird eine mit der Verwendungsdauer der Slurry gleich bleibend hohe Qualität der so hergestellten Scheiben ermöglicht.

Mit einem gesteuerten konstanten Wassergehalt in dem gasförmigen Medium in dem Trennraum der Drahtsäge in einem Bereich von 7 - 17 g/m³, bevorzugt von 11 - 15 g/m³, können konstant gute Ergebnisse hinsichtlich der Qualität der mit der Drahtsäge hergestellten Scheiben erzielt werden und ein häufiges Austauschen der Slurry kann vermieden werden.

Die Verwendung einer Slurry mit einer Viskosität im Bereich von 170 - 220 mPas unabhängig von der Schergeschwindigkeit in einem Bereich von 2 s⁻¹ bis 34 s⁻¹, führt zu einer strukturfreien Oberfläche der gesägten Scheiben, sowie zu einer hohen Langzeitstabilität des Trennprozesses. Die Steuerung der Viskosität der Slurry über den Wassergehalt des Luftstroms in der Drahtsäge führt zu einerlangen Nutzungsdauer der Slurry und die Ga-Bilanz (Wiedergewinnung von Ga aus der benutzten Slurry je Volumeneinheit) ist gegenüber dem herkömmlichen Verfahren verbessert.

Die Erfindung hat weiter den Vorteil, dass hohe Vorschubgeschwindigkeiten bei hoher Qualität der Scheiben möglich sind.

Mit der erfindungsgemäßen Vorrichtung und Verfahren kann einfaches kostengünstiges Polyethylenglykol ohne Verdicker verwendet werden.

Eine Regelung oder Steuerung des Wassergehalts der Luft in der Drahtsäge hat gegenüber der direkten Zugabe von Wasser in die Slurry den Vorteil, dass der Wassergehalt der Slurry in beide Richtungen, nach oben und nach unten, verändert werden kann.

Die Erfindung hat den Vorteil, dass ein gleich bleibender Transport von Slurry in den Trennspalt trotz sich ändernder Eigenschaften des Drahtes und sich ändernder Dichte der Slurry sichergestellt werden kann. Durch die Erfindung kann ein häufiger Drahtwechsel vermieden werden, indem die Viskosität der Slurry auf einen für den Benutzungszustand des Drahtes optimalen Wert eingestellt wird.

Die erfindungsgemäß vorkonditionierte Slurry hat den Vorteil, dass ihre Eigenschaften beim Trennen mit dem erfindungsgemäßen Verfahren sehr gut gesteuert oder geregelt werden können.

Weitere Vorteile und Zweckmäßigkeiten der Erfindung ergeben sich aus der Beschreibung von Ausführungsbeispielen anhand der beigefügten Zeichnungen.

Von den Figuren zeigen:
- Fig. 1: ein erstes Ausführungsbeispiel einer erfindungsgemäßen Drahtsäge;
- Fig. 2: die dynamische Viskosität der Slurry bei einer Schergeschwindigkeit von 20,4 s⁻¹ und die Dichte der Slurry in Abhängigkeit vom GaAs-Gehalt bei einem Verfahren nach einer ersten Ausführungsform;
- Fig. 3: die dynamische Viskosität in Abhängigkeit der Schergeschwindigkeit für verschiedene GaAs-Gehalte der Slurry bei einem mit der Drahtsäge aus Fig. 1 durchgeführten Verfahren nach der ersten Ausführungsform;
- Fig. 4: die dynamische Viskosität der Slurry bei einer Schergeschwindigkeit von 20,4 s⁻¹ sowie den Wassergehalt im Luftstrom in Abhängigkeit vom GaAs-Gehalt der Slurry bei einem Verfahren nach der ersten Ausführungsform;
- Fig. 5: den Verlauf des Wassergehalts von Slurries verschiedener Versuchsreihen mit jeweils zunehmender Einsatzdauer der Slurry bei einem Verfahren nach der ersten Ausführungsform;
- Fig. 6: die dynamische Viskosität in Abhängigkeit der Schergeschwindigkeit für verschiedene GaAs-Gehalte der Slurry bei einem Verfahren nach einer zweiten Ausführungsform;
- Fig. 7: die dynamische Viskosität der Slurry bei einer Schergeschwindigkeit von 20,4 s⁻¹ sowie den Wassergehalt im Luftstrom in Abhängigkeit vom GaAs-Gehalt der Slurry bei einem Verfahren nach der zweiten Ausführungsform;
- Fig. 8: die dynamische Viskosität der Slurry bei einer Schergeschwindigkeit von 20,4 s⁻¹ und die Dichte der Slurry für verschiedene GaAs-Gehalte bei einem Verfahren nach der zweiten Ausführungsform;
- Fig. 9: den Wassergehalt der Slurry in Abhängigkeit von dem GaAs-Gehalt bei einem Verfahren nach der zweiten Ausführungsform;
- Fig. 10: ein zweites Ausführungsbeispiel einer erfindungsgemäßen Drahtsäge;
- Fig. 11: die dynamische Viskosität bei einer Schergeschwindigkeit von 20,4 s⁻¹ und die Dichte der Slurry in Abhängigkeit vom GaAs-Gehalt bei einem ersten der Anmelderin bekannten Verfahren;
- Fig. 12: die dynamische Viskosität der Slurry in Abhängigkeit von der Schergeschwindigkeit für verschiedene GaAs-Gehalte bei dem ersten der Anmelderin bekannten Verfahren;
- Fig. 13: die dynamische Viskosität einer anderen Slurry in Abhängigkeit von der Schergeschwindigkeit für verschiedene GaAs-Gehalte bei einem zweiten der Anmelderin bekannten Verfahren; und
- Fig. 14: die Abhängigkeit des GaAs-Gehalts der Slurry von der Anzahl der Schnitte.

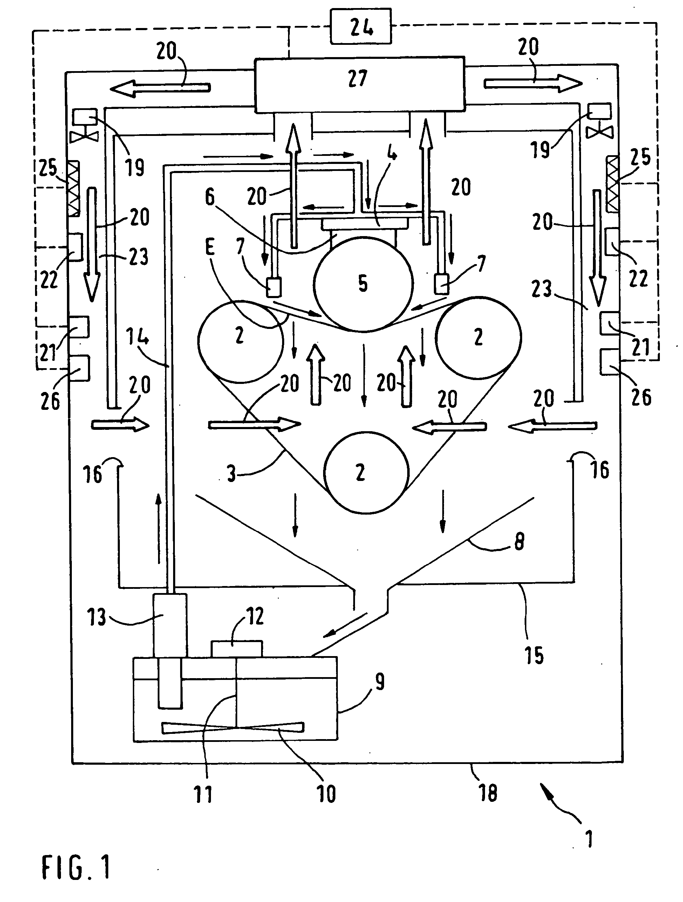

In Fig. 1 ist ein erstes Ausführungsbeispiel einer erfindungsgemäßen Drahtsäge 1 dargestellt.

Die Drahtsäge 1 besitzt parallel zueinander angeordnete Drahtführungsrollen 2, um die ein Draht mehrfach herumgeführt ist, so dass ein Drahtfeld E aus zueinander parallelen Drahtabschnitten aufgespannt wird, das senkrecht zur Bildebene der Fig. 1 steht. Weiter ist eine Vorschubeinrichtung 4 vorgesehen, an der ein Werkstück 5 mit einer Sägeleiste 6 befestigt werden kann. Mit der Vorschubeinrichtung 4 kann das daran befestigte Werkstück 5 in einer Richtung senkrecht zum Drahtfeld E durch das Drahtfeld E hindurch bewegt werden. Die Drahtführungsrollen 2 sind mit einer nicht dargestellten Drehvorrichtung verbunden, welche die Drahtführungsrollen 2 zum Bewegen des Drahtes entlang seiner Längsachse drehen kann.

Oberhalb der Drahtebene sind zwei Slurry-Düsen 7 vorgesehen, durch welche Slurry auf das Drahtfeld E aufgetragen werden kann. Dabei sind die Slurry-Düsen 7 so angeordnet, dass sich in einer Richtung entlang der die Drahtebene E bildenden Drahtabschnitte gesehen jeweils eine Slurry-Düse auf den beiden gegenüberliegenden Seiten des Werkstückes befindet.

Unterhalb der Drahtführungsrollen 2 befindet sich eine trichterförmige Auffangvorrichtung 8. Am unteren Ende der trichterförmigen Auffangvorrichtung 8 befindet sich ein Auslass, durch den mit der Auffangvorrichtung 8 aufgefangene Slurry in einen Slurry-Tank 9 geleitet wird. In dem Slurry-Tank 9 befindet sich ein Rührer 10 zum gleichmäßigen Durchmischen der Slurry. Der Rührer 10 ist über eine Welle 11 mit einem Motor 12 zum Antreiben des Rührers verbunden. Eine Pumpe 13 ist zum Zurückpumpen der Slurry aus dem Slurry-Tank über eine Versorgungsleitung 14 zu den Slurry-Düsen 7 vorgesehen. Die Auffangvorrichtung 8, der Slurry-Tank 9, die Pumpe 13 und die Versorgungsleitung 14 bilden eine Rückführvorrichtung für die Slurry zum Zirkulieren der Slurry in der Drahtsäge.

Der Trennbereich der Drahtsäge, d.h. der Bereich um das Drahtfeld E, in dem das Werkstück im Betrieb der Drahtsäge getrennt wird, ist durch ein inneres Gehäuse 15 von der Umgebung abgetrennt. In dem Gehäuse 15 befinden sich in den zwei sich gegenüber liegenden Seitenwänden unterhalb der Drahtebene E Lufteinlassöffnungen 16. Auf der Oberseite oberhalb der Drahtebene E, d.h. auf der der Auffangvorrichtung abgewandten Seite des Gehäuses 15 befinden sich ein oder mehrere Luftauslassöffnungen 17. Um das innere Gehäuse 15 und den Slurry-Tank 9 ist ein äußeres Gehäuse 18 angeordnet, durch das die Drahtsäge gegenüber der Umgebung klimatisch derart abgeschlossen ist, dass der Wassergehalt und die Temperatur der Luft in der Drahtsäge unabhängig von der Umgebung außerhalb des Gehäuses 18 eingestellt werden können. In dem Zwischenraum zwischen dem äußeren Gehäuse 18 und dem inneren Gehäuse 15 sind zwei Luftzirkulationskanäle 23 ausgebildet, die zum Führen eines Luftstroms von den Luftauslassöffnungen 17 zu den Lufteinlassöffnungen 16 dienen. Die Luftzirkulationskanäle 23 sind zum Slurry-Tank 9 hin offen.

In den Luftzirkulationskanälen 23 sind Ventilatoren 19 angeordnet zum Aufrechterhalten der Zirkulation eines Luftstroms entlang der Pfeile 20.

Ein Luftfeuchtesensor 21 ist in dem Luftzirkulationskanal 23 zum Messen des Wassergehalts der aus dem inneren Gehäuse 15 austretenden Luft angeordnet. Weiter sind ein Luftbefeuchter 22 und ein Lufttrockner 27 in dem Luftzirkulationskanal 23 angeordnet. Der Luftbefeuchter 22 und der Lufttrockner 27 sind über eine Regeleinrichtung 24 mit dem Luftfeuchtesensor 21 verbunden. Die Regeleinrichtung 24, der Luftfeuchtesensor 21, der Lufttrockner 27 und der Luftbefeuchter 22 bilden einen Regelkreis zum Regeln des Wassergehalts des zirkulierenden Luftstroms auf einen vorbestimmten Wert.

In dem Luftzirkulationskanal 23 sind außerdem eine Heizeinrichtung 25 und ein Temperatursensor 26 angeordnet, welche über die Regeleinrichtung 24 miteinander verbunden sind. Die Regeleinrichtung 24, der Temperatursensor 26 und die Heizeinrichtung bilden einen Regelkreis, mit dem die Temperatur des Luftstroms auf einen vorbestimmten Wert geregelt werden kann.

Im Betrieb der Drahtsäge 1 wird ein an der Vorschubeinrichtung 4 mit der Sägeleiste 6 befestigtes Werkstück 5 in einer Richtung senkrecht zum Drahtfeld E durch dieses hindurch bewegt. Der Draht 3 wird dabei durch Drehen der Drahtführungsrollen 2 derart bewegt, dass sich die Drahtabschnitte des Drahtfelds E entlang ihrer Längsachse bewegen. Beim Trennvorgang bewegen sich die Drahtabschnitte auf einer Seite des Werkstückes in den Trennspalt hinein, während sich die Drahtabschnitte auf einer gegenüberliegenden Seite des Werkstückes aus dem Trennspalt hinaus bewegen. Der Draht wird zum Trennen im Gleichlauf immer in einer Richtung oder abwechselnd hin und her bewegt.

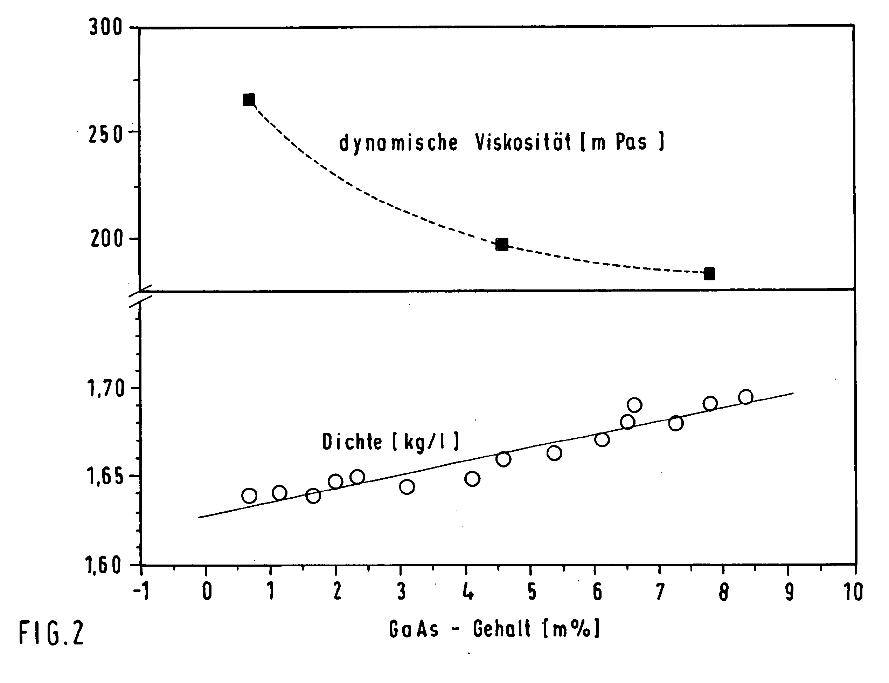

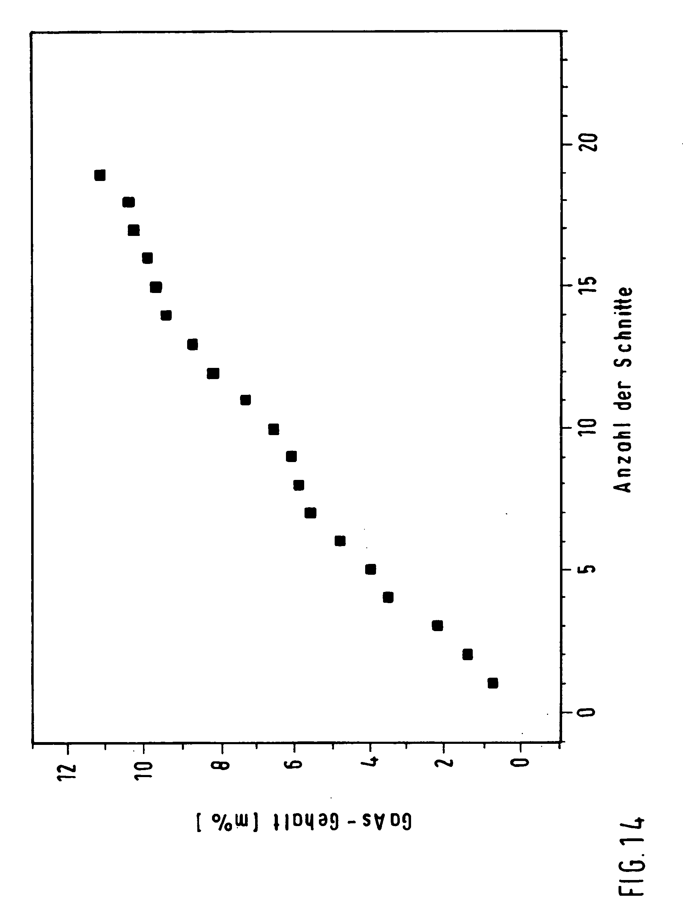

Durch die Slurry-Düse 7 auf der Seite des Werkstückes 5, auf der sich die Drahtabschnitte in den Trennspalt hinein bewegen, wird Slurry auf die Drahtabschnitte des Drahtfelds E aufgebracht. Mit den Drahtabschnitten wird die Slurry in den Trennspalt transportiert. Die dabei verwendete Slurry enthält eine Trägersubstanz auf Glykolbasis (z.B. Polyethylenglykol mit der Produktbezeichnung "Pluriol E 200" der BASF AG oder das Stoffgemisch auf Glykolbasis "Betronol MF V 1016" der MKU Chemie GmbH) und einen abrasiv wirkenden Hartstoff wie SiC-Körner (z.B. SiC Fujimi GC 1000). Aufgrund der abrasiven Wirkung des SiC-Korns und des Materialabtrages beim Bewegen des Drahtes mit der Slurry durch den Trennspalt werden die Werkstückscheiben herausgeläppt (Drahttrennläppen). Dabei nimmt die Slurry abgetragenes Material von dem Werkstück auf, so dass die Dichte der Slurry mit zunehmender Verwendungsdauer im Trennprozeß zunimmt. Dieses Verhalten der Slurry mit zunehmender Dauer des Trennprozesses ist im unteren Teil der Fig. 2 zu sehen, in dem die Dichte der Slurry gegen den GaAs-Gehalt aufgetragen ist. Wie aus Fig. 14 zu sehen nimmt der GaAs-Gehalt der Slurry mit der Anzahl der Schnitte, d.h. der Anzahl der geschnittenen GaAs-Einkristalle stetig zu, wobei der genaue Zusammenhang zwischen Anzahl der Schnitte und GaAs-Gehalt der Slurry von der Länge und dem Durchmesser der geschnittenen GaAs-Einkristalle abhängt. Die Anzahl der Scheiben je geschnittenen GaAs-Einkristall liegt in der Regel zwischen 100 und 200 Scheiben. Eine zunehmende Anzahl der Schnitte bedeutet gleichzeitig eine zunehmende Verwendungsdauer der Slurry. Eine Zunahme des GaAs-Gehalts entspricht daher einer fortschreitenden Verwendungsdauer der Slurry.

Die zum Trennen des Werkstücks verwendete Slurry gelangt unter Wirkung der Schwerkraft über die Auffangvorrichtung 8 in den Slurry-Tank 9. Im Slurry-Tank 9 wird die Slurry mittels des Rührers 10 gleichmäßig durchmischt, so dass die Slurry homogene Eigenschaften beibehält. Danach wird die Slurry aus dem Slurry-Tank 9 mittels der Pumpe 13 durch die Versorgungsleitung 14 zu den Slurry-Düsen 7 zurückgepumpt. Die Slurry wird durch die Slurry-Düsen 7 erneut auf die sich in den Trennspalt bewegenden Drahtabschnitte der Drahtebene E aufgebracht. Auf diese Art und Weise wird ein Kreislauf der Slurry in der Drahtsäge aufrecht erhalten.

Mit Hilfe der Ventilatoren wird die Luft in der Drahtsäge in dem Luftzirkulationskanal 23 von den Luftauslassöffnungen 17 zu den Lufteinlassöffnungen 16 befördert. Dadurch und durch die Anordnung der Lufteinlass- und Luftauslassöffnungen 16, 17 wird die Luft in der Drahtsäge durch den Trennraum entlang der Pfeile 20 in Fig. 1 befördert. Dadurch wird ein zirkulierender Luftstrom in der Drahtsäge durch den Luftzirkulationskanal 23 und den Trennraum im inneren des inneren Gehäuses 15 aufrechterhalten. Der Wassergehalt der zirkulierenden Luft wird mit dem Luftfeuchtesensor 21, der Regeleinrichtung 24, dem Lufttrockner 27 und dem Luftbefeuchter 22 geregelt. Gleichzeitig wird die Temperatur der zirkulierenden Luft durch die Heizeinrichtung 25, den Temperatursensor 26 und die Regeleinrichtung 24 auf einen festen vorbestimmten Wert geregelt.

Die in der folgenden Beschreibung von Verfahren zum Trennen eines Werkstücks angegebenen Werte für die dynamische Viskosität der Slurry wurden mit einem Haake Viskotester 6L mit Messadapter für kleine Probenmengen mit zylindrischer Geometrie aufgenommen. Dabei wurde die Spindel 6L, ein Probenvolumen von 10 ml und eine Messtemperatur von 24,5 °C verwendet. Die im folgenden angegebenen Wassergehalte der Slurry wurden mit der Karl-Fischer-Titration bestimmt. Die Karl-Fischer-Titration wird nach dem Abtrennen des Feststoffanteils durchgeführt, d.h. die gemessenen und beschriebenen Wassergehalte beziehen sich auf den flüssigen Anteil der Slurry.

Bei einem Verfahren zum Trennen eines Werkstückes nach einer ersten Ausführungsform wird der Wassergehalt der Luft auf einen konstanten Wert geregelt.

Im folgenden wird ein konkretes Ausführungsbeispiel für das Verfahren zum Trennen eines Werkstücks nach der ersten Ausführungsform beschrieben. Es wurden bei dem Ausführungsbeispiel GaAs-Einkristalle mit einem Durchmesser von 150 mm mit einer Vorschubgeschwindigkeit von > 2 mm/min getrennt. Der Wassergehalt der Luft wurde auf einen konstanten Wert von (12 ± 1) g/m³, die Temperatur des Luftstroms in der Drahtsäge konstant auf (23° ± 1) °C geregelt und der Luftdurchsatz im Trennraum auf (400 ± 50) m³/h eingestellt. Der Luftdruck in der Drahtsäge war der Umgebungsdruck. Die Slurry zirkulierte in der Drahtsäge mit einem Massestrom von (6000 ± 500) kg/h. Während des Trennens eines Einkristalls wurde der Draht im Gleichlauf, d.h. in einer gleich bleibenden Richtung entlang der Drahtachse, mit einer Geschwindigkeit von 8 - 12 m/s bewegt.

Bei dem Ausführungsbeispiel für das Verfahren nach der ersten Ausführungsform wurde von der in der DE 100 52 154 A1 beschriebenen Erfindung Gebrauch gemacht. Insbesondere wurde der Winkel ρ zwischen einer vorbestimmten kristallographischen Richtung in der Trennebene und der Vorschubrichtung derart gewählt, dass Kräfte, die beim Trennen auf den Draht der Drahtsäge in einer Richtung senkrecht zur Trennebene wirken, einander im wesentlichen kompensieren.

Weiter wurden die Einkristalle bei dem hier beschriebenen Ausführungsbeispiel in der Drahtsäge nach einem in der DE 101 28 630 A1 beschriebenen Verfahren mit Hilfe eines Autokollimationsfernrohrs in der Drahtsäge ausgerichtet.

Als Slurry wurde eine Suspension von "SiC Fujimi GC 1000" der Firma Fujimi als abrasiver Hartstoff in "Betronol MF V 1016" von der MKU Chemie GmbH als Trägersubstanz verwendet. Die Slurry besaß ein Massenverhältnis zwischen SiC und der Trägersubstanz Betronol von m_{SiC}/m_{Betronol} = 0,8 ± 0,2. Die Slurry wurde vor dem ersten Trennvorgang mit einer Ausgangsviskosität von etwa 300 mPas hergerichtet. Durch eine Vorkonditionierung nach dem oben beschriebenen Verfahren ohne GaAs-Einkristall wurde der Wassergehalt der Slurry auf etwa 60 g/l angehoben.

In den Figuren 2 bis 4 ist das Verhalten der Slurry bei dem zuvor beschriebenen Ausführungsbeispiel mit zunehmendem GaAs-Gehalt, d.h. mit zunehmender Verwendungsdauer, der Slurry dargestellt.

In Fig. 2 ist die dynamische Viskosität und die Dichte der Slurry gegen den GaAs-Gehalt aufgetragen. Dabei nimmt die dynamische Viskosität der Slurry trotz zunehmender Dichte mit fortschreitender Verwendungsdauer ab. Dadurch können gleichbleibend gute Oberflächeneigenschaften der von dem Werkstück abgetrennten Scheiben erzielt werden.

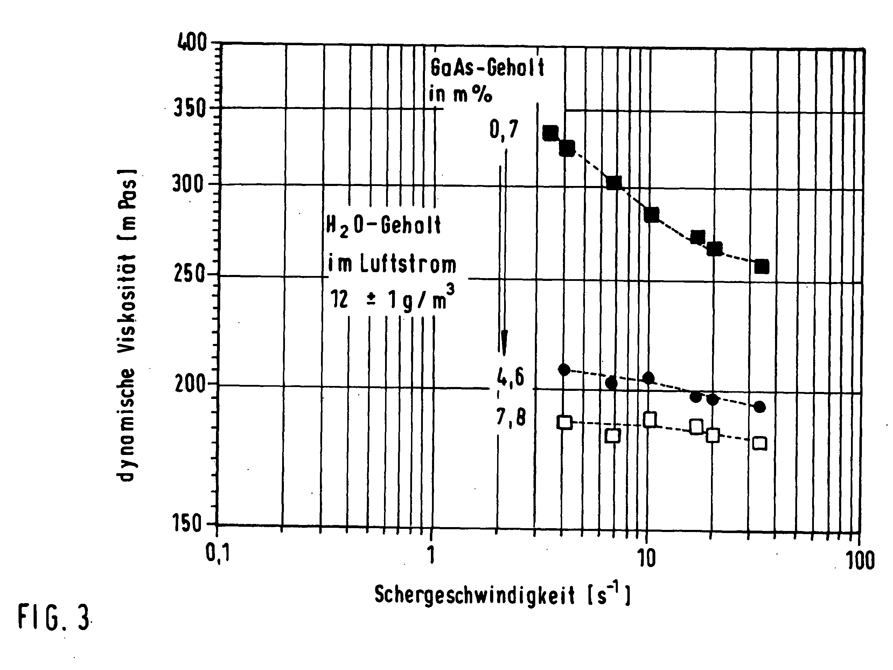

In Fig. 3 ist die dynamische Viskosität der Slurry in Abhängigkeit von der Schergeschwindigkeit für verschiedene GaAs-Gehalte dargestellt. Mit zunehmendem GaAs-Gehalt der Slurry, d.h. mit zunehmender Verwendungsdauer der Slurry im Trennprozess, nimmt die dynamische Viskosität kontinuierlich auf einen Wert von etwa 190 mPas bei einem GaAs-Gehalt von 7,8 Masse-% ab. Zu Beginn der Verwendung in Trennprozess zeigt die Slurry nicht-newtonsches Verhalten, d.h. die dynamische Viskosität ist von der Schergeschwindigkeit stark abhängig, während die Slurry mit fortschreitender Verwendungsdauer eine immer geringer werdende Abhängigkeit der dynamischen Viskosität von der Schergeschwindigkeit zeigt. Bei einem GaAs-Gehalt von 7,8 Masse-% ist das rheologische Verhalten der Slurry ähnlich einer newtonschen Flüssigkeit und von der Schergeschwindigkeit im Bereich von 2 s⁻¹ bis 34 s⁻¹ im Wesentlichen unabhängig.

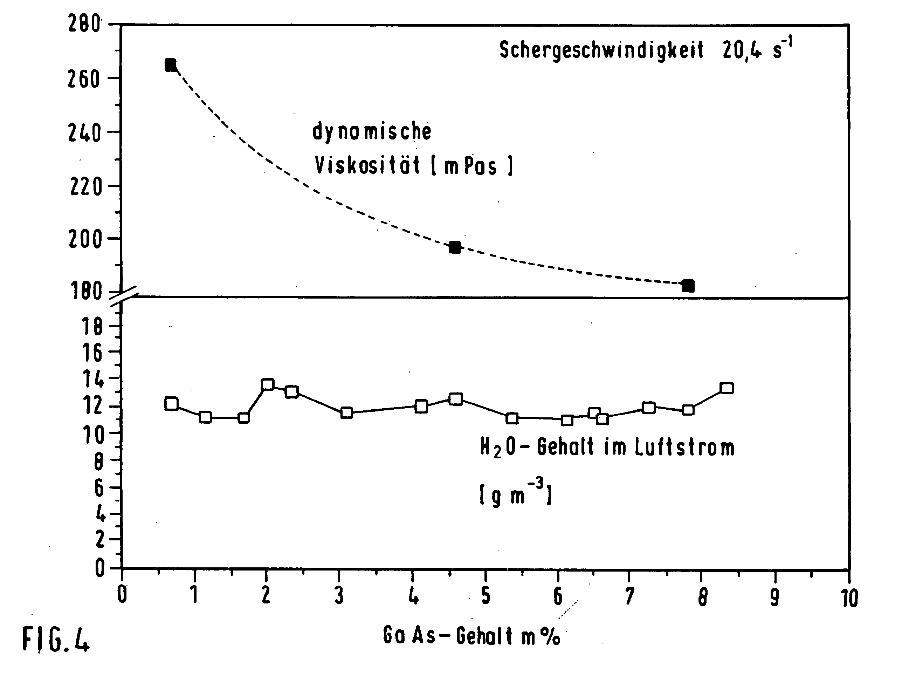

In Fig. 4 ist die dynamische Viskosität bei einer Schergeschwindigkeit von 20,4 s⁻¹ und der Wassergehalt im Luftstrom in Abhängigkeit vom GaAs-Gehalt der Slurry dargestellt.

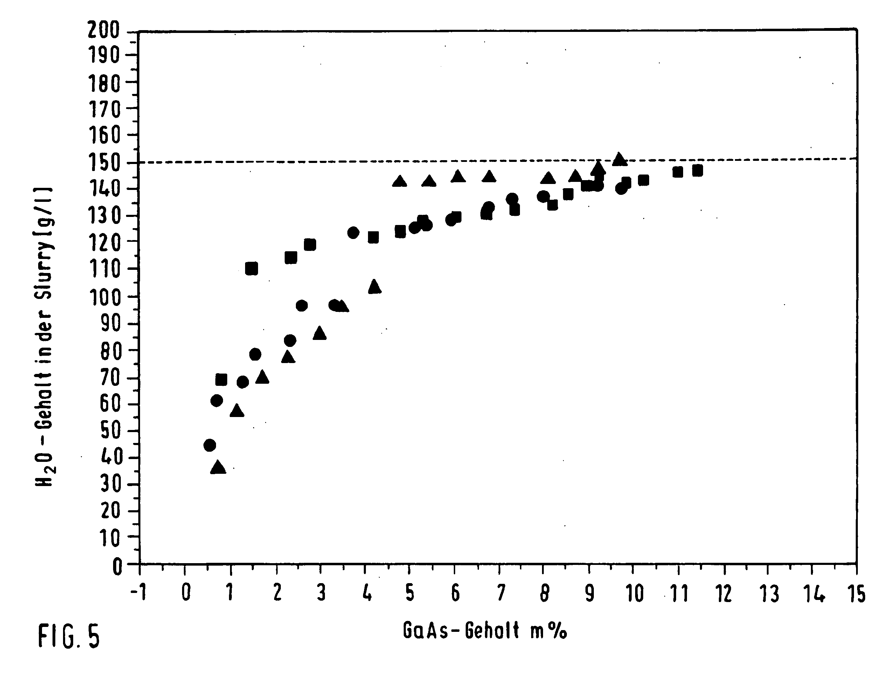

In Fig. 5 ist der Wassergehalt der Slurry gegen den GaAs-Gehalt für verschiedene Versuchsreihen dargestellt. Jede der Versuchsreihen die in dem Graphen durch verschiedene Symbole angedeutet sind, wurde gemäß dem zuvor beschriebenen Ausführungsbeispiel ohne Austauschen der Slurry durchgeführt. Ein zunehmender GaAs-Gehalt in der Slurry entspricht einer zunehmenden Einsatzdauer der Slurry. Die verschiedenen Versuchsreihen unterscheiden sich durch unterschiedlich lange Standzeiten zwischen einzelnen Trennprozessen. Für jede der Versuchsreihen steigt der Wassergehalt der Slurry asymptotisch mit zunehmendem GaAs-Gehalt auf einen Wert von etwa 150 g/l an.

Mit dem Verfahren nach der ersten Ausführungsform werden gleichbleibend gute Eigenschaften der Werkstückscheiben hinsichtlich der Oberflächenrauhigkeit sowie der Waferkrümmung (Warp, Bow) und der Welligkeit (Waviness) erzielt. Der Warp der bei obigem Ausführungsbeispiel hergestellten Scheiben wurde mit einem Tropel FlatMaster® Interferometer gemessen. Der Warp der gesägten Scheiben betrug nach dem Entfernen der Störschicht durch nasschemisches Ätzen 10 µm oder weniger. Mit bloßem Auge waren auf der Oberfläche der GaAs-Scheiben nach dem Sägen, insbesondere auch im Bereich des Rands, an dem beim Sägen der Draht aus dem Trennspalt ausgetreten ist, keine Strukturen zu erkennen. So ist bei Anwendung des erfindungsgemäßen Verfahrens mit bloßem Auge auch nicht zu erkennen, in welcher Richtung der Draht beim Sägen relativ zur Scheibe gelaufen ist bzw. orientiert war. Mit bloßem Auge ist die so erzeugte Oberfläche im gesägten Zustand sowie auch nach dem nasschemischen Entfernen der Störschicht nicht von einer Oberfläche zu unterscheiden, die durch Planläppen (einseitig oder doppelseitig) erzeugt wird. Dieser Unterschied ist nur mit spezieller Messtechnik erkennbar, wie z.B. mit dem Tropel Flatmaster® Interferometer, mit dem u.a. die Bewegungsrichtüng des Drahtes nachweisbar ist. Die mit dem erfindungsgemäßen Verfahren erzeugte Oberfläche kann, ohne z.B. durch einseitiges oder doppelseitiges Planläppen nachbearbeitet zu werden, bereits nach dem nasschemischen Entfernen der Störschicht für bestimmte Anwendungen ausgeliefert werden, z.B. als Rückseite bei einseitig polierten Wafern oder z.B. für LPE-Anwendungen.

Die maximale Rauhtiefe Rₘₐₓ dieser Oberflächen nach DIN 4768 beträgt über den gesamten Wafer, insbesondere auch im Bereich des Randes, an dem der Draht aus dem Trennspalt austritt, 10 µm oder weniger bei einer Gesamtmessstrecke von lₘ = 15 mm und einer Grenzwellenlänge bei einer Hochpassfilterung von λ = 0,8 mm. Auch bei einer Grenzwellenlänge bei einer Hochpassfilterung von λ = 2,5 mm beträgt die Rauhtiefe der Oberfläche 10 µm oder weniger bei ansonsten gleichen Messparametern. Gemessen wurde die Rauhigkeit senkrecht zur Drahtrichtung mit einem Rauhigkeitsmessgerät Perthometer S5P der Fa. Mahr unter Verwendung der Tastspitze RFHTB-50. Mit dieser Rauhigkeit eignen sich die Oberflächen z.B. für LPE-Anwendungen.

Gleichzeitig wird mit dem Verfahren eine hohe Laufzeitstabilität des Trennprozesses erreicht. Ein Auswechseln der Slurry ist erst nach einer Vielzahl von Trennprozessen notwendig, wodurch die Ga-Bilanz bei der Wiedergewinnung von Ga aus der benutzten Slurry verbessert werden kann.

Ein Verfahren nach einer zweiten Ausführungsform unterscheidet sich von dem Verfahren nach der ersten Ausführungsform dadurch, dass der Wassergehalt der in der Drahtsäge zirkulierenden Luft mit der Verwendungsdauer der Slurry variiert wird. Durch das Verändern des Wassergehalts im Luftstrom während der Verwendungsdauer der Slurry, können die Eigenschaften der Slurry an andere sich im Laufe der Zeit ändernde Parameter angepasst werden.

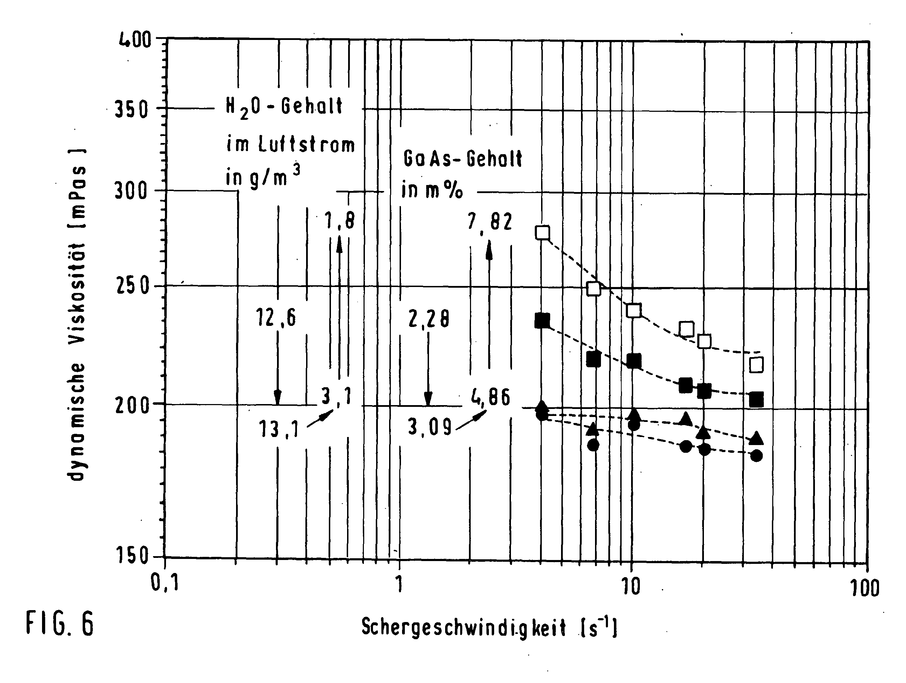

Ein konkretes Ausführungsbeispiel für das Verfahren nach einer zweiten Ausführungsform wird mit Figuren 6 bis 9 beschrieben werden. Es wurden wie oben GaAs-Einkristalle mit einem Durchmesser von 150 mm getrennt. Die dabei verwendete Slurry war eine Suspension des abrasiven Hartstoffs "SiC Fujimi GC 1000" der Firma Fujimi in der Trägersubstanz "Pluriol E 200" der BASF AG mit einem Massenverhältnis von m_{SiC}/m_{Pluriol} = 0,8 ± 0,2. Für Druck, Temperatur, Luft- und Slurrydurchsatz in der Drahtsäge, Geschwindigkeit des Drahtes, Vorschubgeschwindigkeit wurden die gleichen Parameter wie bei dem zuvor beschriebenen Ausführungsbeispiel für ein Verfahren nach der ersten Ausführungsform verwendet. Die Orientierung der GaAs-Einkristalle in der Drahtsäge erfolgte wie oben nach den in der DE 100 52 154 A1 und der DE 101 28 630 A1 beschriebenen Verfahren.

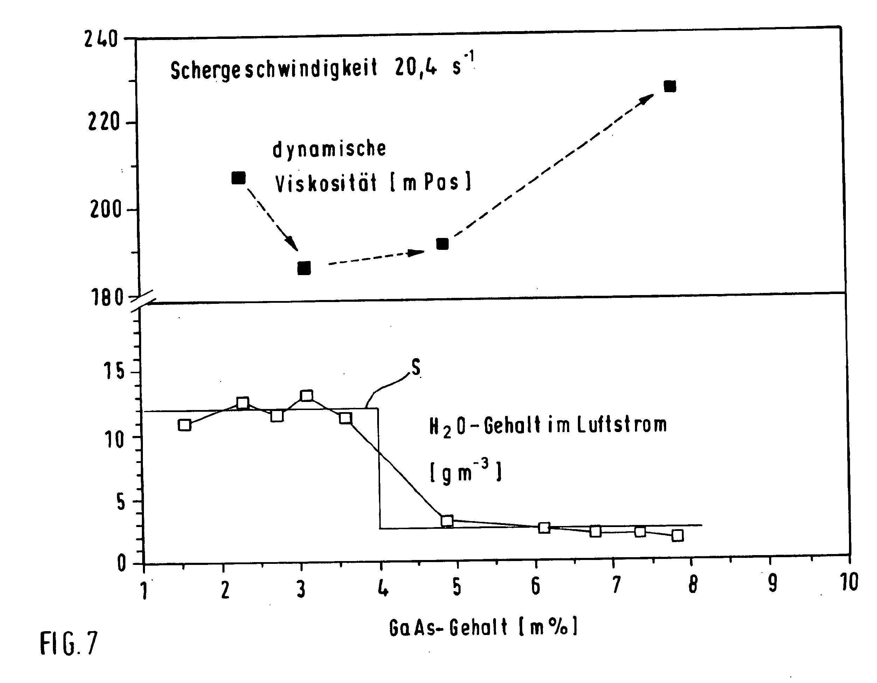

Der Wassergehalt im Luftstrom wurde wie in Fig. 7 unten zu sehen ist auf eine von der Einsatzdauer, d.h. dem GaAs-Gehalt, der Slurry abhängige vorbestimmte Sollwertkurve S geregelt. Der Wassergehalt des Luftstroms wurde bis zu einem GaAs-Gehalt von 4 Masse-% auf einen Wert von (13 ± 2) g/m³ geregelt (gefüllte viereckige und gefüllte runde Symbole in Fig. 6). In Fig. 6 ist zu sehen, dass die Viskosität der Slurry, wie beim Ausführungsbeispiel für das Verfahren nach der ersten Ausführungsform, mit steigendem GaAs-Gehalt in den asymptotischen und von der Schergeschwindigkeit im Bereich von 2s⁻¹ bis 34 s⁻¹ unabhängigen Bereich von (190 ± 20) mPas sinkt . Nach Erreichen eines GaAs-Gehalts von 4,0 Masse-%, wird der Wassergehalt im Luftstrom auf (2,5 ± 1,0) g/m³ geregelt (gefüllte dreieckige Symbole und offene viereckige Symbole in Fig. 6). Die Viskosität der Slurry steigt wieder an und gleichzeitig wird die Viskosität wieder von der Schergeschwindigkeit abhängig, d.h. das Verhalten der Slurry wird nicht-newtonsch.

In Fig. 7 ist die dynamische Viskosität der Slurry bei einer Schergeschwindigkeit von 20,4 s⁻¹ und der Wassergehalt im Luftstrom gegen den GaAs-Gehalt aufgetragen. Es ist wiederum deutlich erkennbar, wie die dynamische Viskosität bei hohem Wassergehalt im Luftstrom mit zunehmender Verwendungsdauer, d.h. mit zunehmendem GaAs-Gehalt, abnimmt und bei niedrigem Wassergehalt im Luftstrom mit zunehmender Verwendungsdauer wieder zunimmt.

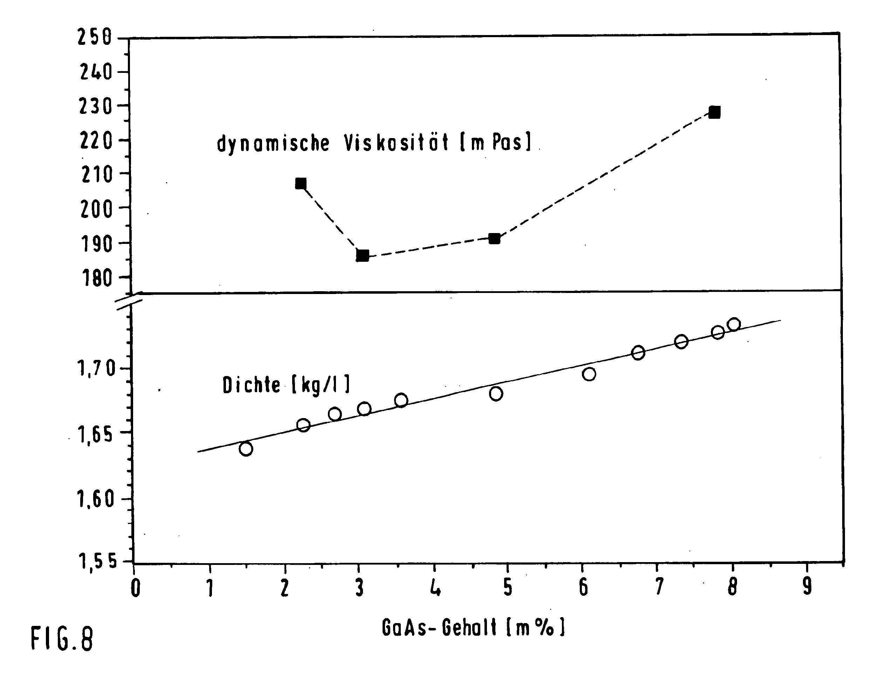

In Fig. 8 ist die dynamische Viskosität und die Dichte der Slurry gegen den GaAs-Gehalt aufgetragen. Aus Fig. 8 ist ersichtlich, dass die dynamische Viskosität der Slurry durch das Verfahren nach der zweiten Ausführungsform unabhängig von der Dichte der Slurry eingestellt werden kann.

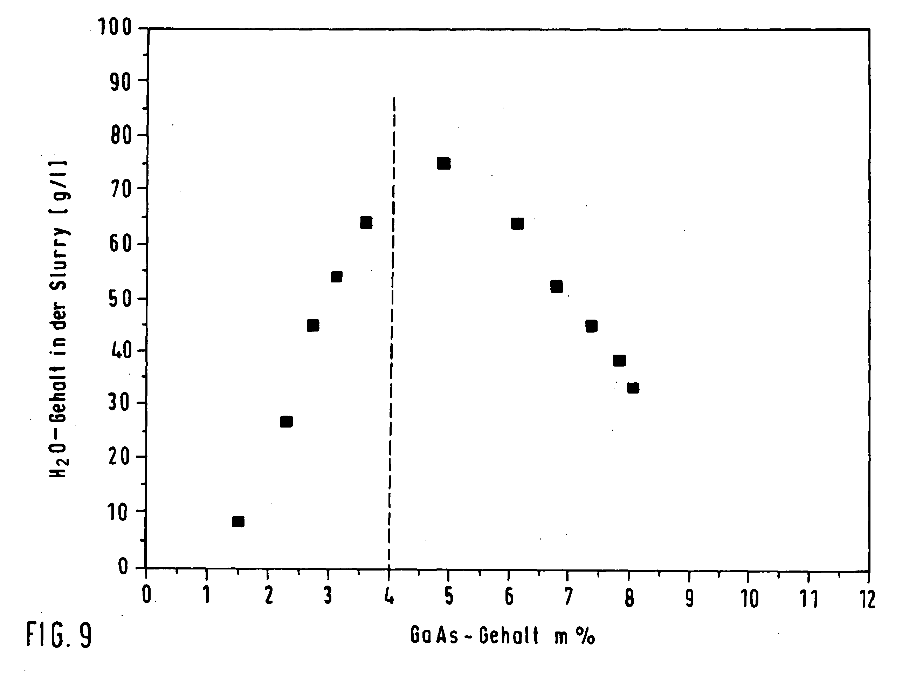

In Fig. 9 ist der Wassergehalt der Slurry gegen den GaAs-Gehalt aufgetragen. Deutlich ist zu sehen, dass der Wassergehalt unterhalb eines GaAs-Gehalts von 4 Masse-% stetig zunimmt und oberhalb des GaAs-Gehalts von 4 Masse-% wieder abnimmt, nachdem der Wassergehalt des Luftstroms in der Drahtsäge wie oben beschrieben von (13 ± 2) g/m³ auf (2,5 ± 1,0) g/m³ abgesenkt wurde.

Mit dem Verfahren nach der zweiten Ausführungsform können Schwankungen in den Drahteigenschaften ausgeglichen werden, so dass auch bei sich ändernden Drahteigenschaften die Oberflächenqualität der abgetrennten Werkstückscheiben konstant hoch bleibt. So kann ein häufiger Drahtwechsel oder das Auswechseln der Slurry bei einem Drahtwechsel vermieden werden.

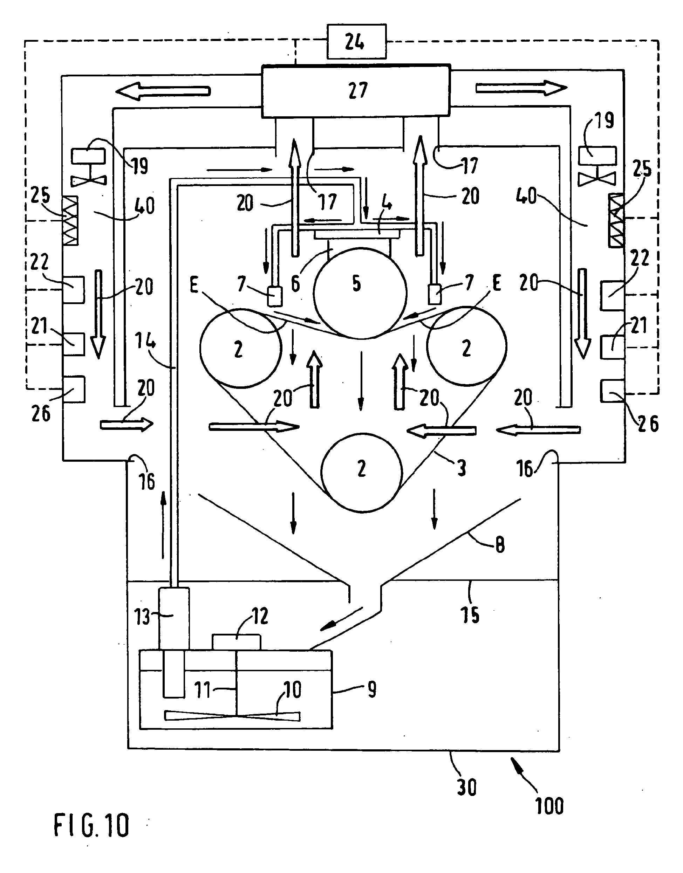

In Fig. 10 ist eine Drahtsäge 100 gemäß einem zweiten Ausführungsbeispiel für eine erfindungsgemäße Drahtsäge dargestellt.

In Fig. 10 sind Elemente, die gleich denjenigen bei der Drahtsäge gemäß dem ersten Ausführungsbeispiel in Fig. 1 sind, durch die gleichen Bezugszeichen gekennzeichnet und eine Beschreibung davon wird hier nicht wiederholt.

Die Drahtsäge 100 gemäß dem zweiten Ausführungsbeispiel unterscheidet sich von der Drahtsäge 1 gemäß dem ersten Ausführungsbeispiel dadurch, dass der zirkulierende Luftstrom von dem Slurry-Tank abgetrennt ist. Der Slurry-Tank 9 befindet sich in einem zum Außenraum der Drahtsäge im Wesentlichen luftdicht abgeschlossenen Gehäuse 30. Der zirkulierende Luftstrom 20 wird durch Luftzirkulationskanäle 40 von den Luftauslassöffnungen 17 zu den Lufteinlassöffnungen 16 geführt.

Bei der Drahtsäge nach dem zweiten Ausführungsbeispiel sind die Luftzirkulationskanäle 40 nicht zum Vorratsbehälter 9 hin offen. Der Wassergehalt der Luft in dem Gehäuse 30 ist deshalb unabhängig von dem des zirkulierenden Luftstroms 20. Dadurch kann der Wasseraustausch zwischen dem zirkulierenden Luftstrom und der zirkulierenden Slurry auf den Trennbereich konzentriert werden. In dem Trennbereich kann der gezielte Wasseraustausch besonders gut erfolgen, da auf der Drahtebene und im Trennspalt eine große Grenzfläche zwischen Luft und Slurry zur Verfügung steht.

Abwandlungen von den beschriebenen Ausführungsbeispielen und Ausführungsformen sind möglich innerhalb dem Schutzumfang der Ansprüche.

Der zirkulierende Luftstrom in der Drahtsäge wurde so beschrieben, dass der Luftstrom in dem Trennbereich von unten nach oben durch das Drahtfeld E geführt wird. Eine umgekehrte Zirkulationsrichtung, bei der die Luft im Trennbereich von oben nach unten durch die Drahtebene bewegt wird, ist möglich.

Bei dem ersten wie auch bei dem zweiten Ausführungsbeispiel der Drahtsäge findet der Wasseraustausch zwischen dem Luftstrom und der Slurry im Trennbereich statt. Der Wasseraustausch kann jedoch auch an jeder anderen Stelle stattfinden, an der die Luft mit der Slurry in Kontakt kommt. So kann eine spezielle Wasseraustauschvorrichtung in der Versorgungsleitung 14 vorgesehen sein.

Das erste und das zweite Ausführungsbeispiel der Drahtsäge wurden mit einer bestimmten Anordnung der Luftein- und Luftauslässe 16, 17 beschrieben. Eine andere Anordnung der Luftein- und Luftauslässe zum Führen eines Luftstroms in der Drahtsäge ist möglich. Eine andere Anordnung der Luftfeuchtesensoren, der Temperatursensoren, der Ventilatoren 19, der Heizeinrichtung 25 und der Luftbefeuchter 22 ist möglich, solange die Temperatur und der Wassergehalt des Luftstroms in der Drahtsäge geregelt werden können.

Die Ausführungsbeispiele für die erfindungsgemäße Drahtsäge wurden mit einem Lufttrockner und einem Luftbefeuchter beschrieben. Jedoch ist je nach Temperatur und anfänglichen Wassergehalt der Luft in der Drahtsäge, Wassergehalt der Slurry sowie dem einzustellenden Wassergehalt der Luft nur ein Lufttrockner oder aber nur ein Luftbefeuchter für die Regelung oder Steuerung des Wassergehalts der Luft auf einen vorbestimmten Wassergehalt ausreichend.

Als Trägersubstanz für die Slurry wurden Trägersubstanzen mit den Produktnamen "Pluriol E 200" von der BASF AG und "Betronol MF V 1016" von der MKU Chemie GmbH beschrieben. Jedoch ist auch jede andere Trägersubstanz denkbar, welche die Fähigkeit zum Wasseraustausch mit einem gasförmigen Medium besitzt, also alle hygroskopischen Flüssigkeiten, die Wasser aufnehmen und wieder abgeben können. Beispielsweise kann auch "Pluriol E300" der BASF AG, eine höhermolekulare Variante des beschriebenen Beispiels "Pluriol E200" als Trägersubstanz verwendet werden

Als abrasiver Hartstoff in der Slurry wurde SiC mit der Produktbezeichnung "SiC Fujimi GC 1000" der Firma Fujimi beschrieben. Die Verwendung eines anderen abrasiv wirkenden Hartstoffes, wie z.B. Hartstoffe aus Aluminiumoxid (Al₂O₃), kubischem Bornitrid (cBN), Borcarbid oder Diamant, ist möglich.

Die Ausführungsformen wurden mit einem in der Drahtsäge zirkulierenden Luftstrom beschrieben. Jedoch ist anstatt Luft auch die Verwendung eines anderen gasförmigen Mediums wie z.B. Stickstoff möglich.

Das erfindungsgemäße Verfahren wurde mit einer bestimmten Temperatur der Luft in der Drahtsäge, einem bestimmten Durchsatz von Slurry und Luft in der Drahtsäge, einer bestimmten Vorschubgeschwindigkeit und einer bestimmten Geschwindigkeit des Drahtes beschrieben. Die Verwendung von anderen Werten für diese Parameter ist möglich.

Das Ausführungsbeispiel für das Verfahren nach der zweiten Ausführungsform wurde so beschrieben, dass der Wassergehalt im Luftstrom nach einer Sollwertkurve geregelt wurde. Jedoch ist auch die Regelung des Wassergehalts in dem Luftstrom in Abhängigkeit von der Riefenbildung auf dem Wafer, von der Viskosität der Slurry oder der Dichte der Slurry möglich.

Das erfindungsgemäße Verfahren wurde mit einer Trennung von GaAs-Einkristallen beschrieben. Jedoch ist auch die Trennung von Werkstücken aus einem anderen Material möglich.

## Patentansprüche

1. Drahtsäge (1; 100) zum Trennen eines Werkstücks (5) mit:
einem Draht (3), der in einem Trennbereich der Drahtsäge vorgesehen ist, in dem im Betrieb der Drahtsäge das Trennen des Werkstückes stattfindet;
einer Aufbringeinrichtung (7) zum Aufbringen von einer Slurry auf den Draht (3);
einer Einrichtung (21, 22, 24, 27) zum Einstellen eines vorbestimmten Wassergehalts zumindest eines Teils des die Slurry umgebenden gasförmigen Mediums; und
einer Einrichtung (19) zum Bewegen des gasförmigen Mediums in der Drahtsäge;
**dadurch gekennzeichnet, dass**:
die Einrichtung (21, 22, 24, 27) zum Einstellen des vorbestimmten Wassergehalts in einem Kanal (23, 40) vorgesehen ist, welcher außerhalb des Trennbereichs angeordnet und mit diesem jeweils über eine Einlassöffnung (16) und eine Auslassöffnung (17) verbunden ist; und
die Einrichtung (19) zum Bewegen des gasförmigen Mediums eingestellt ist das gasförmige Medium in einem gerichteten Strom (20) durch den Kanal (23, 40) und durch den Trennbereich hindurch von der Einlassöffnung (16) zu der Auslassöffnung (17) zur Einstellung des vorbestimmten Wassergehalts hindurch zu bewegen.

2. Drahtsäge nach Anspruch 1 mit einem Gehäuse (15, 18; 30), das zumindest einen den Trennbereich und den Kanal (23, 40) umfassenden Teil der Drahtsäge klimatisch derart von der Umgebung abtrennt, dass der Wassergehalt des gasförmigen Mediums in diesem Teil unabhängig von dem Wassergehalt außerhalb dieses Teils der Drahtsäge eingestellt werden kann.

3. Drahtsäge nach einem der Ansprüche 1 bis 2, mit einer Regeleinrichtung (21, 22, 24) zum Regeln des Wassergehaltes des gasförmigen Mediums im Trennbereich.

4. Drahtsäge nach einem der Ansprüche 1 bis 3, weiter mit:
einer Auffangvorrichtung (18) zum Auffangen der im Betrieb auf den Draht (3) aufgebrachten Slurry; und
einer Rückführeinrichtung (9, 13, 14) zum Rückführen der mit der Auffangvorrichtung (8) aufgefangenen Slurry.

5. Drahtsäge nach Anspruch 4 mit einer Einrichtung zum Regeln oder Steuern des Wassergehalts des gasförmigen Mediums im Bereich der Rückführeinrichtung.

6. Drahtsäge nach einem der Ansprüche 1 bis 5, weiter mit einer Einrichtung (24, 25, 26) zum Regeln oder Steuern der Temperatur des gasförmigen Mediums in der Drahtsäge.

7. Verfahren zum Trennen eines Werkstücks mittels Drahtsägen, wobei eine auf den Draht (3) aufgebrachte Slurry verwendet wird; und
der Wassergehalt von zumindest einem Teil des die Slurry umgebenden gasförmigen Mediums geregelt oder gesteuert wird;
**dadurch gekennzeichnet, dass**
das gasförmige Medium in einem vom Trennbereich, in dem im Betrieb der Drahtsäge das Trennen des Werkstückes stattfindet, getrennten und mit diesem jeweils über einen Gaseinlass (16) und einen Gasauslass (17) verbundenen Kanal (23) in einem gerichteten Strom (20) hindurch bewegt und geführt wird; und
der Wassergehalt des gasförmigen Mediums in dem Kanal (23) außerhalb des Trennbereichs geregelt oder gesteuert wird.

8. Verfahren nach Anspruch 7, wobei der Wassergehalt des gasförmigen Mediums im Trennbereich, in dem das Trennen des Werkstücks stattfindet, zumindest zeitweise auf einen Wert im Bereich von 7-17 g/m³ geregelt oder gesteuert wird.

9. Verfahren nach einem der Ansprüche 7 bis 8, wobei der Wassergehalt des gasförmigen Mediums im Trennbereich, in dem das Werkstück getrennt wird, zumindest zeitweise auf einen Wert im Bereich von 11-15 g/m³ geregelt oder gesteuert wird.

10. Verfahren nach Anspruch 7, wobei der Wassergehalt des gasförmigen Mediums im Trennbereich zumindest zeitweise auf einen Wert von weniger als etwa 5 g/m³ geregelt oder gesteuert wird.

11. Verfahren nach einem der Ansprüche 7 bis 10, wobei der Wassergehalt des gasförmigen Mediums in Abhängigkeit von der Dichte und/oder der Viskosität der Slurry variabel geregelt wird.

12. Verfahren nach einem der Ansprüche 7 bis 10, wobei der Wassergehalt des gasförmigen Mediums auf einer von der Einsatzdauer abhängigen, vorbestimmten Soll-Kurve gehalten wird.

13. Verfahren nach einem der Ansprüche 7 bis 12, bei dem die Temperatur des gasförmigen Mediums geregelt oder gesteuert wird.

14. Slurry mit einem abrasiven Hartstoff und zur Verwendung in einer Drahtsäge, wobei die Slurry neben dem abrasiven Hartstoff eine hygroskopische Trägersubstanz aufweist,
welche die Fähigkeit besitzt Wasser aufzunehmen und wieder abzugeben, vorzugsweise auf Glykolbasis, **dadurch gekennzeichnet, dass** die Slurry
eine im Bereich der Schergeschwindigkeit von 2 s⁻¹ bis 34 s⁻¹ von der Schergeschwindigkeit unabhängige dynamische Viskosität im Bereich von 170 bis 220 mPa·s aufweist.

15. Slurry nach Anspruch 14, wobei die dynamische Viskosität der Slurry im Bereich der Schergeschwindigkeit von 1 s⁻¹ bis 100 s⁻¹ eine im Wesentlichen von der Schergeschwindigkeit unabhängige dynamische Viskosität aufweist.

16. Slurry nach einem der Ansprüche 14 bis 15, die einen Wassergehalt von mehr als 60 g/l aufweist.

17. Verfahren zum Vorkonditionieren einer Slurry mit einer hygroskopischen Trägersubstanz, **dadurch gekennzeichnet, dass**
die Slurry zunächst mit einer bei einer Schergeschwindigkeit von 20,4 s⁻¹ vorbestimmten Ausgangsviskosität hergerichtet wird und
danach die Slurry in einer Drahtsäge vorkonditioniert wird, wobei der Wassergehalt von zumindest einem Teil des die Slurry umgebenden gasförmigen Mediums geregelt oder gesteuert wird, sodass die Slurry bei einer Schergeschwindigkeit von 20,4 s⁻¹ eine von der Ausgangsviskosität verschiedene Viskosität von etwa 220 mPas oder weniger aufweist.

18. Slurry nach Anspruch 14, die mit einem Verfahren nach Anspruch 17 hergestellt ist.

## Claims

1. Wire saw (1, 100) for separating of a work piece (5) comprising:
a wire (3), which is provided in a separating portion of the wire saw, in which in operation the wire saw separates the work piece;
a depositing device (7) for depositing of a slurry on wire (3);
a device (21, 22, 24, 27) for adjusting of a predetermined water content of at least a part of a gaseous medium surrounding the slurry; and
a device (19) for moving the gaseous medium in the wire saw;
**characterized in that**
the device (21, 22, 24, 27) for adjusting of the predetermined water content is provided in a channel (23, 40), which is positioned outside of the separating portion and is connected with it by an inlet opening (16) and an outlet opening (17), respectively; and
the device (19) for moving the gaseous medium is adjusted to move the gaseous medium in a directed flow (20) through the channel (23, 40) and through the separating portion from the inlet opening (16) to the outlet opening (17) for adjusting of the predetermined water content.

2. Wire saw according to claim 1, having a housing (15, 18, 30), which climatically separates a part of the wire saw from the environment, which part at least encompasses the separating portion and the channel (23, 40), such that the water content of the gaseous medium can be adjusted in that part independent from the water content outside of this part of the wire saw.

3. Wire saw according to claims 1 to 2, having a closed loop device (21, 22, 24) for closed loop control of the water content of the gaseous medium in the separating portion.

4. Wire saw according to claims 1 to 3, further comprising:
a collecting device (8) for collecting of the in operation deposited slurry onto wire (3); and
a recycling device (9, 13, 14) for recycling of the slurry collected by the collecting device (8).

5. Wire saw according to claim 4 with a device for closed loop control or open loop control of the water content of the gaseous medium in the area of the recycling device.

6. Wire saw according to claims 1 to 5, further comprising a device (24, 25, 26) for closed loop or open loop control of the temperature of the gaseous medium in the wire saw.

7. Method for separating of a work piece by a wire saw wherein a slurry deposited onto wire (3) is used; and
the water content of at least a part of the gaseous medium surrounding the slurry is closed loop or open loop controlled;
**characterized in that**
the gaseous medium is moved through and led in a directed flow (20) in a channel (23), which is separated from the separating portion and in which in operation of the wire saw the separation of the work piece takes place, and which is connected to the separating portion by gas inlet (16) and gas outlet (17), respectively; and
the water content of the gaseous medium is closed loop or open loop controlled in channel (23) outside of the separating portion.

8. Method according to claim 7, wherein the water content of the gaseous medium in the separating portion, in which the separating of the work piece takes place, is at least temporarily closed loop or open loop controlled to a value in the interval of 7-17 g/m³.

9. Method according to claims 7 to 8, wherein the water content of the gaseous medium in the separating portion, in which the separating of the work piece takes place is at least temporarily closed loop or open loop controlled to a value in the interval of 11-15 g/m³.

10. Method according to claim 7, wherein the water content of the gaseous medium in the separating portion is at least temporarily closed loop or open loop controlled to a value of less than 5 g/m³.

11. Method according to claims 7 to 10, wherein the water content of the gaseous medium can be variably closed loop controlled depending of the density and/or the viscosity of the slurry.

12. Method according to claims 7 to 10, wherein the water content of the gaseous medium is held on a predetermined target curve depending on the period of use.

13. Method according to claims 7 to 12, wherein the temperature of the gaseous medium is closed loop or open loop controlled.

14. Slurry with an abrasive hard material and for usage in a wire saw,
wherein the slurry comprises besides an abrasive hard material a hygroscopic carrier substance, which has the ability to absorb water and release it again preferably based on glycol, **characterized in that** the slurry
comprises in an interval of the shear rate of 2 s⁻¹ to 34 s⁻¹ a dynamic viscosity in the interval of 170 to 220 mPas, which is independent from the shear rate.

15. Slurry according to claim 14, wherein the dynamic viscosity of the slurry comprises in the interval of the shear rate of 1 s⁻¹ to 100 s⁻¹ a dynamic viscosity substantially independent of the shear rate.

16. Slurry according to any of claims 14 to 15, which comprises a water content of more than 60 g/l.

17. Method for preconditioning of a slurry with a hygroscopic carrier substance **characterized in that**
the slurry is firstly provided with a predetermined starting viscosity at a shear rate of 20,4 s⁻¹ and
afterwards the slurry is preconditioned in a wire saw, wherein the water content of at least a part of the gaseous medium surrounding the slurry is open loop controlled or closed loop controlled so that the slurry comprises a viscosity of about 220 mPas or less at a shear rate of 20,4 s⁻¹, which is different from the starting viscosity.

18. Slurry according to claim 14, which is manufactured with a method of claim 17.

## Revendications

1. Scie à fil (1 ; 100) pour le tronçonnage d'une pièce (5), comportant :
un fil (3) prévu dans une zone de tronçonnage de la scie à fil, où le tronçonnage de la pièce est exécuté en état de fonctionnement de la scie à fil ;
un dispositif d'application (7) destiné à appliquer une matière liquide sur le fil (3) ;
un dispositif (21, 22, 24, 27) de réglage d'une teneur définie en eau d'au moins une partie du milieu gazeux entourant la matière liquide ; et
un dispositif (19) de déplacement du milieu gazeux dans la scie à fil ;
**caractérisée**
**en ce que** le dispositif (21, 22, 24, 27) de réglage d'une teneur définie en eau est prévu dans un canal (23, 40) situé à l'extérieur de la zone de tronçonnage et relié à celle-ci par une ouverture d'admission (16) et une ouverture d'évacuation (17) ;
le dispositif (19) de déplacement du milieu gazeux est prévu pour déplacer le milieu gazeux dans un flux dirigé (20) au travers du canal (23, 40) et au travers de la zone de tronçonnage, de l'ouverture d'admission (16) à l'ouverture d'évacuation (17), pour le réglage de la teneur définie en eau.

2. Scie à fil selon la revendication 1, comportant un carter (15, 18 ; 30), lequel sépare climatiquement de son environnement au moins une partie de la scie à fil comprenant la zone de tronçonnage et le canal (23, 40), de manière à permettre le réglage dans cette partie de la teneur en eau du milieu gazeux indépendamment de la teneur en eau en dehors de cette partie de la scie à fil.

3. Scie à fil selon la revendication 1 ou la revendication 2, comportant un dispositif de régulation (21, 22, 24) destiné à réguler la teneur en eau du milieu gazeux dans la zone de tronçonnage.

4. Scie à fil selon l'une des revendications 1 à 3, comportant en outre :
un dispositif de collecte (8) destiné à recueillir la matière liquide appliquée sur le fil (3) en état de fonctionnement ; et
un dispositif de recyclage (9, 13, 14) destiné à recycler la matière liquide recueillie par le dispositif de collecte (8).

5. Scie à fil selon la revendication 4, comportant un dispositif de régulation ou de commande de la teneur en eau du milieu gazeux au niveau du dispositif de recyclage.

6. Scie à fil selon l'une des revendications 1 à 5, comportant en outre un dispositif (24, 25, 26) de régulation ou de commande de la température du milieu gazeux dans la scie à fil.

7. Procédé de tronçonnage d'une pièce avec une scie à fil, où une matière liquide appliquée sur le fil (3) est utilisée et où
la teneur en eau d'au moins une partie du milieu gazeux entourant la matière liquide est régulée ou commandée ;
**caractérisé**
**en ce que** le milieu gazeux est déplacé et conduit dans un flux dirigé (20) au travers du canal (23) séparé de la zone de tronçonnage où le tronçonnage de la pièce est exécuté en état de fonctionnement de la scie à fil et relié à celle-ci par une ouverture d'admission (16) et une ouverture d'évacuation (17) ; et
**en ce que** la teneur en eau du milieu gazeux est régulée ou commandée dans le canal (23) à l'extérieur de la zone de tronçonnage.

8. Procédé selon la revendication 7, où la teneur en eau du milieu gazeux est au moins temporairement régulée ou commandée à une valeur comprise entre 7 et 17 g/m³ dans la zone de tronçonnage où est exécuté le tronçonnage de la pièce.

9. Procédé selon la revendication 7 ou la revendication 8, où la teneur en eau du milieu gazeux est au moins temporairement régulée ou commandée à une valeur comprise entre 11 et 15 g/m³ dans la zone de tronçonnage où est exécuté le tronçonnage de la pièce.

10. Procédé selon la revendication 7, où la teneur en eau du milieu gazeux est au moins temporairement régulée ou commandée à une valeur inférieure à quelque 5 g/m³ dans la zone de tronçonnage.

11. Procédé selon l'une des revendications 7 à 10, où la teneur en eau du milieu gazeux est régulée de manière variable en fonction de la densité et/ou de la viscosité de la matière liquide.

12. Procédé selon l'une des revendications 7 à 10, où la teneur en eau du milieu gazeux est maintenue sur une courbe de consigne définie, dépendante de la durée de mise en oeuvre.

13. Procédé selon l'une des revendications 7 à 12, où la température du milieu gazeux est régulée ou commandée.

14. Matière liquide avec une matière dure abrasive, destinée à être utilisée dans une scie à fil,
ladite matière liquide comportant une substance porteuse hygroscopique en plus de la matière dure abrasive,
laquelle a la propriété d'absorber l'eau et de la restituer, préférentiellement à base de glycol,
**caractérisée**
**en ce que** ladite matière liquide présente dans la plage de vitesse de cisaillement comprise entre 2 s⁻¹ et 34 s⁻¹ une viscosité dynamique indépendante de la vitesse de cisaillement, comprise entre 170 et 220 mPas.

15. Matière liquide selon la revendication 14, où la viscosité dynamique de ladite matière liquide présente dans la plage de vitesse de cisaillement comprise entre 1 s⁻¹ et 100 s⁻¹ une viscosité dynamique sensiblement indépendante de la vitesse de cisaillement.

16. Matière liquide selon la revendication 14 ou la revendication 15, présentant une teneur en eau supérieure à 60 g/l.

17. Procédé de pré-conditionnement d'une matière liquide avec une substance porteuse hygroscopique,
**caractérisé**
**en ce que** ladite matière liquide est d'abord pourvue d'une viscosité initiale définie pour une vitesse de cisaillement de 20,4 s⁻¹,
ladite matière liquide étant ensuite pré-conditionnée dans une scie à fil, la teneur en eau d'au moins une partie du milieu gazeux entourant la matière liquide étant régulée ou commandée, si bien que la matière liquide présente une viscosité de quelque 220 mPas ou moins, différente de la viscosité initiale, pour une vitesse de cisaillement de 20,4 s⁻¹.

18. Matière liquide selon la revendication 14, produite par un procédé selon la revendication 17.
